(19) Europäisches Patentamt
European Patent Office
Office européen des brevets

(11) EP 4 636 130 A1

(12) EUROPEAN PATENT APPLICATION

(43) Date of publication:
**22.10.2025 Bulletin 2025/43**

(21) Application number: **25165869.6**

(22) Date of filing: **25.03.2025**

(51) International Patent Classification (IPC):
***C23F 11/08*** *(2006.01)* ***C23F 11/10*** *(2006.01)*
***C23F 11/16*** *(2006.01)*

(52) Cooperative Patent Classification (CPC):
**C23F 11/165; C09K 8/54; C23F 11/08; C23F 11/10;**
C09K 2208/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.04.2024 IN 202421031359**

(71) Applicant: **Tata Consultancy Services Limited**
**Maharashtra (IN)**

(72) Inventors:
- **KUMAR, Dharmendr**
**411057 Pune, Maharashtra (IN)**
- **JAIN, Vinay**
**411028 Pune, Maharashtra (IN)**
- **RAI, Beena**
**411028 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

# (54) CORROSSION INHIBITOR COMPOSITIONS

(57) This disclosure relates generally to a corrosion inhibitor compositions. The corrosion inhibition property of a molecules is related to low energy gap ($\Delta E_{gap}$ ) between lowest un-occupied molecular orbital (LUMO) and highest occupied molecular orbital (HOMO). State-of-art corrosion inhibitors are associated with a considerable toxicity profile. Especially being toxic to the environment, including marine and freshwater areas. The proposed corrosion inhibitor composition is developed by screening the large number of chemical compounds having substantially safe environment profile and having low $\Delta E_{gap}$ based on HOMO and LUMO calculations. The screened compounds are utilized in preparing the corrosion inhibitor compositions. The compositions so developed demonstrated excellent corrosion inhibition efficiency as well as minimum toxicity profile, thus completely safer to the environment.

System 100

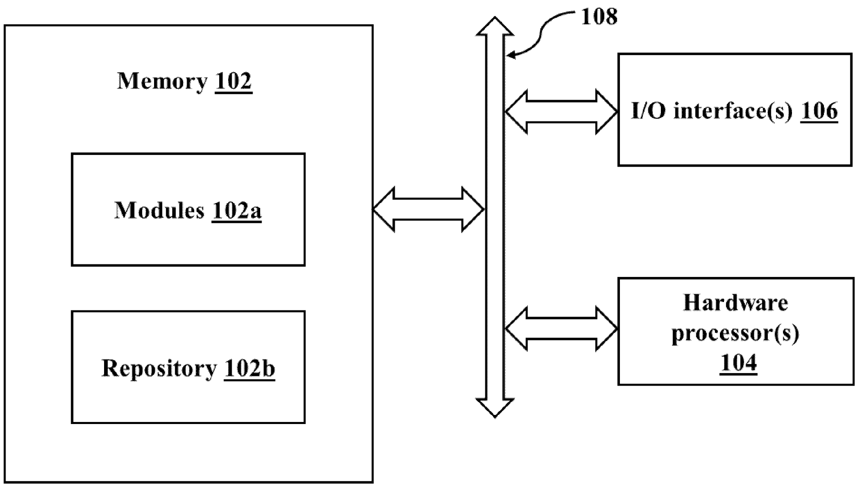


FIG. 1



Processed by Luminess, 75001 PARIS (FR)

## Description

CROSS-REFERENCE TO RELATED APPLICATIONS AND PRIORITY

The present application claims priority from Indian patent application no. 202421031359, filed on April 19, 2024.

TECHNICAL FIELD

The disclosure herein generally relates to the field of corrosion inhibition, and, more particularly, to corrosion inhibitor compositions for metal and alloys thereof.

BACKGROUND

Metal corrosion is a ubiquitous phenomenon costing the global economy trillions of dollars annually. Besides, corrosion can also lead to catastrophic explosions and consequent loss of material and life. In general terms, corrosion is the deterioration of a metal or an alloy when exposed to the environment. Corrosion cannot be stopped but it can be reduced to certain extent. There are several ways by which corrosion reduction can be made possible, viz., by using paints, coatings, corrosion resistant alloys, etc. However, the use of corrosion inhibitors is one of the most economical and effective ways to combat corrosion in the industry. Corrosion inhibitors are generally organic or inorganic compounds which when used in small (usually in parts per million) quantities reduce the corrosion significantly through formation of a protective film or through similar such mechanisms. Corrosion inhibitors are extensively used for a wide variety of applications in the industry. In particular, the oil and gas industry uses corrosion inhibitors for acid well stimulation for enhancing oil recovery from rock formations.

Performance of corrosion inhibitors which are available conventionally depends on the medium treated, the type of surface (metals & alloys) that is susceptible to corrosion, the type of corrosion encountered, and the conditions to which the surface is exposed. Further, the conventional corrosion inhibitors do not show strong binding with iron and iron alloys surface and hence iron and iron alloys structures loses luster (due to corrosion) in presence of most of the conventionally available corrosion inhibitors. Further, a highly efficient and durable inhibitor that can effectively protect iron and iron alloys in aggressive environments such as high temperature for longer duration without affecting the luster is yet to be realized.

A variety of corrosion inhibitors are known. For example, the use of a composition which comprises an aminecarboxylic acid such as dodecylamine propionic acid, and a nitrogen-containing compound containing an organic hydrophobic group, such as N-(3-octoxypropyl)propylenediamine or a cyclic nitrogen-containing compound such as morpholine, cyclohexylamine or an imidazoline. Also, amino-amido polymers which are the reaction product of a polyamine and an acrylate-type compound, which polymers may be cross-linked. The polymers have several uses including use as corrosion inhibitors.

Although corrosion inhibitors of many types are known, most of them that are found effective in practice, have the disadvantage of toxicity to the environment. Toxicity to the marine or freshwater environment is of particular concern. In oil and gas field applications, much work is done offshore or on the coast. If a corrosion inhibitor enters the sea or a stretch of fresh water, then, even at relatively low concentrations, the corrosion inhibitor can kill microorganisms, fish, or other aquatic life, causing an imbalance in the environment. Therefore, there exists a dire need to develop effective green corrosion inhibitors which are more benign to the environment.

SUMMARY

Embodiments of the present disclosure present technological improvements as solutions to one or more of the above-mentioned technical problems recognized by the inventors in conventional systems.

In an aspect, there is provided a corrosion inhibitor composition comprising at least one thiophenecarboxaldehyde compound of a formula (I):

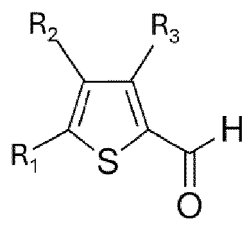

wherein $R_1$ is an H-atom, alkyl group having 1 to 4 carbon atoms, an alkoxy group having 1 to 4 carbon atoms, an

alkoxycarbonyl group having 1 to 4 carbon atoms, formyl group and $NO_2$ group, $R_2$ is an H-atom, alkyl group having 1 to 4 carbon atoms, an alkoxy group having 1 to 4 carbon atoms, an alkoxycarbonyl group having 1 to 4 carbon atoms, and $R_3$ is an H-atom, alkyl group having 1 to 4 carbon atoms, an alkoxy group having 1 to 4 carbon atoms, an alkoxycarbonyl group having 1 to 4 carbon atoms. The thiophenecarboxaldehyde compound comprising the corrosion inhibitor composition are selected from the group comprising of 3-methyl-2-thiophenecarboxaldehyde, 5-methyl-2-thiophenecarboxaldehyde, 3-ethyl-2-thiophenecarboxaldehyde and 5-ethyl-2-thiophenecarboxaldehyde, 5-phenylthiophene-2-carbaldehyde, 5-formyl-2-thiophenecarboxylic acid and 5-nitrothiophene-2-carboxaldehyde. The corrosion inhibitor composition further comprises (b) an organic solvent; and (c) at least one intensifier additive.

In another aspect, there is provided a method of preparing a corrosion inhibitor composition comprising steps: (i) adding a thiophenecarboxaldehyde compound of a formula:

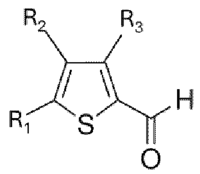

in an organic solvent and homogenizing them to obtain a premix; (ii) adding at least one intensifier additive to the premix; and (iii) homogenizing the premix of step (ii) to obtain the corrosion inhibitor composition, and wherein the corrosion inhibitor composition comprises:

(a) thiophenecarboxaldehyde compound of a formula:

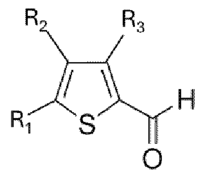

comprising (b) an organic solvent; and (c) at least one intensifier additive. The method further comprising of adding an, auxiliary agent and an organic solvent to the premix and homogenized to obtain the corrosion inhibitor composition.

In another aspect, there is provided a method of inhibiting corrosion by applying to ferrous metals, the corrosion inhibitor composition comprising at least one thiophenecarboxaldehyde compound and wherein, the corrosion inhibitor composition is contacted with the ferrous metals include one of carbon steel, stainless steel, alloy steel, steels, and cast irons in a corrosion inducing n environment, wherein the corrosion inducing environment is an aqueous acidic solution in the form of (i) a water-containing hydrocarbon, (ii) a water-containing gas with acidic solution, (iii) a water containing gas without acidic solution, and d) a combination thereof.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for screening and design of corrosion inhibitors, in accordance with some embodiments of the present disclosure.

FIG. 2 depicts adsorption of 5-methyl-2-thiophenecarboxaldehyde on the iron-surface, in accordance with some embodiments of the present 30 disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible

without departing from the scope of the disclosed embodiments.

The term "green corrosion inhibitor" refers to a nontoxic, biodegradable and a non-bioaccumulative compound capable of inhibiting the corrosion of metals in acidic and/or alkaline environment.

The term "ferrous metals" refers to steel, cast iron, as well as alloys of iron with other metals (such as with stainless steel) wherein a variety of alloying elements such as chromium, nickel, manganese, molybdenum, and vanadium, manganese are added with iron in a suitable proportions based on desired output quality.

The terms "mix", "mixed" or "mixing" as used herein are intended to embrace all synthesis procedures, including, without limitation, batch, continuous, in-situ, interfacial and/or solution type processes and combinations thereof.

Corrosion entails degradation of a material inserted into a given environment, which can be of a chemical or an electrochemical nature, and mostly are not associated with mechanical stresses. In metals, it is related to the tendency of the metal to reverse to the natural state of lower internal energy. Metals and their alloys are the most susceptible materials to this degradation. Carbon steel, for example, is the most used steel in several areas and one of the most produced materials worldwide. In 2020, 1864.0 million tons of carbon steel was produced globally, but it is estimated that 20% of this steel produced was used for the replacement of parts of equipment or installations that suffered corrosion. Thus, to avoid the loss of equipment, machinery and structures, prevention from corrosion is crucial. In addition, it can extend the life of parts and mitigate the costs associated with inspections, repairs, and replacements. The impact caused by this high rate of corrosion affects many sectors and generates a significant effect on a country's economy. The measures commonly used, individually or in combination, to combat corrosion are methods based on process modification (structure design; surface conditions; by the application of cathodic protection), modification of the corrosive environment (deaeration of water or neutral solution; purification or reduction of air humidity; addition of corrosion inhibitors), in the modification of the metal (increase in purity; addition of alloying elements; heat treatment) and in protective coatings (coatings with reaction products, such as chemical or electrochemical treatment of the metal surface; organic coatings, such as paints, resins or polymers; inorganic coatings, such as enamels and cements; metallic coatings; temporary protectors). One of the most practical methods to protect metals is the use of corrosion inhibitors. They are a class of compounds capable of slowing the corrosion of a metal when added in small quantities (generally parts per million (ppm) levels) to the environment to which it will be exposed. Its mechanism of action is generally associated with the formation of a protective barrier by adsorbing on its surface. The corrosion inhibitors protect metals by slowing down the corrosion processes in one of the following ways: (1) increasing the anodic or cathodic polarization behavior (Tafel curves); (2) reducing the movement or diffusion of ions to the metallic surface and (3) increasing the electrical resistance of the metallic surface. Some corrosion inhibitors, however, are potentially polluting and harmful to human health, and this motivated the search for new formulations. Studies to explore "green inhibitors" of corrosion is directed to synthesize/identify compounds that are biocompatible, biodegradable and are available from renewable sources, which are easy to acquire, low cost and nontoxic. Inhibitors of this nature are usually based on organic compounds, generally acting as mixed-type inhibitors, as they have heteroatoms (i.e., N, S, O), electronegative groups and conjugated double bonds, characteristics present in good corrosion inhibitors as the main centers of adsorption. These inhibitors adsorb and form a covalent bond on the metal surface. Organic inhibitors cover the entire surface area of the metal with a thick film composed of several monolayers and change the structure of the electrical double layer at the metal interface, decreasing the corrosion rate. They can also act as a barrier film that blocks anodic and cathodic active sites or slows the rate of diffusion of electroactive species to the metal surface.

Highest occupied molecular orbital (HUMO) and Lowest unoccupied molecular orbital (LUMO) energies are crucial quantum chemical parameters that describes the reactivity and stability of a molecule. The HOMO value generally indicates the tendency of the molecule to donate electrons to low-lying vacant/partially filled orbitals of a metal. Therefore, the adsorption process of a molecule on a metal surface is generally facilitated and increased with increase in HOMO energy ($E_{HOMO}$). Hence, higher HOMO energy of a molecule enhances the corrosion inhibition potential of the molecule. On the other hand, LUMO energy ($E_{LUMO}$) value of a molecule generally indicates its tendency to accept electrons from metal surface. Therefore, lower $E_{LUMO}$ generally indicates higher inhibition efficiency. Survey of literature shows that the adsorption of the inhibitor on the metal surface can occur on the basis of donor-acceptor interactions between the $\pi$-electrons of the heterocyclic compound and the vacant d-orbital of the metal surface atoms, high value of $E_{HOMO}$ of the molecules shows its tendency to donate electrons to appropriate acceptor molecules with low energy empty/partially filled molecular orbitals. Increasing values of $E_{HOMO}$ facilitate adsorption and therefore enhance the inhibition efficiency, by influencing the transport process through the adsorbed layer. Similar relations were found between the rates of corrosion and $\Delta E_{gap}$ ($\Delta E = E_{LUMO} - E_{HOMO}$). Consequently, concerning the value of the energy gap $\Delta E$, larger values of the energy difference will confer lower reactivity to a chemical species. Generally, lower values of the $\Delta E$ will render higher inhibition efficiency.

Referring now to the drawings, and more particularly to FIG. 1, where similar reference characters denote corresponding features consistently throughout the figures, there are shown preferred embodiments, and these embodiments are described in the context of the following exemplary compositions and/or methods.

FIG. 1 is an exemplary block diagram of a system for screening corrosion inhibitors, in accordance with some embodiments of the present disclosure.

In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism. The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases. The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server. The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like. The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types. The plurality of modules 102a may include programs or computer-readable instructions or coded instructions that supplement application functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer readable instructions executed by the one or more hardware processors 104, or by a combination thereof. **In** an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure. The repository 102b may include a database or a data engine. Further, the repository 102b amongst other things, may serve as a database or includes a plurality of databases for storing the data that is processed, received, or generated as a result of the execution of the plurality of modules 102a. Although the repository 102a is shown internal to the system 100, it will be noted that, in alternate embodiments, the repository 102b can also be implemented externally to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

In the present disclosure, $E_{gap}$ for several molecules is calculated and shortlisted based on the $\Delta E_{gap}$. The molecules having significantly lower $\Delta E_{gap}$ are further taken for adsorption energy calculation with the metal surface (i.e. steel) for which corrosion inhibitor is to be developed. In the present disclosure, thiophenecarboxaldehyde compounds shows significantly lower $\Delta E_{gap}$ and high adsorption energy (magnitude). The thiophenecarboxaldehyde compounds are tested experimentally and found to show very high corrosion inhibition efficiency.

Accordingly, a corrosion inhibitor composition comprising at least one thiophenecarboxaldehyde compound is represented by a formula:

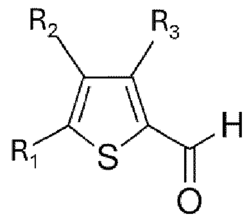

wherein $R_1$ is an H-atom, alkyl group having 1 to 4 carbon atoms, alkoxy group having 1 to 4 carbon atoms, alkoxycarbonyl group having 1 to 4 carbon atoms, formyl group and $NO_2$ group,

$R_2$ is an H-atom, N-atom, O-atom, alkyl group having 1 to 4 carbon atoms, alkoxy group having 1 to 4 carbon atoms, alkoxycarbonyl group having 1 to 4 carbon atoms, $R_3$ is an H-atom, N-atom, O-atom, alkyl group having 1 to 4 carbon atoms, alkoxy group having 1 to 4 carbon atoms, alkoxycarbonyl group having 1 to 4 carbon atoms.

According to an embodiment of the present disclosure, the thiophenecarboxaldehyde compound is selected from the group comprising of 3-methyl-2-thiophenecarboxaldehyde, 5-methyl-2-thiophenecarboxaldehyde, 3-ethyl-2-thiophenecarboxaldehyde and 5-ethyl-2-thiophenecarboxaldehyde, 5-phenylthiophene-2-carbaldehyde, 5-formyl-2-thiophenecarboxylic acid and 5-nitrothiophene-2-carboxaldehyde.

According to an embodiment of the present disclosure, the thiophenecarboxaldehyde compound is 5-methyl-2-thiophenecarboxaldehyde.

According to an embodiment of the present disclosure, the thiophenecarboxaldehyde compound is present in an amount from about 0.01 to 10000 parts per million by volume, preferably, from about 0.1 to 1000 parts per million by volume, and more preferably, from about 1 to 100 parts per million by volume.

According to an embodiment of the present disclosure, a corrosion inhibitor composition comprising at least one thiophenecarboxaldehyde compound is represented by a formula:

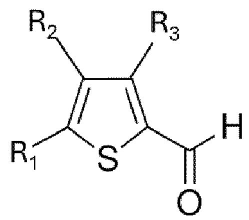

wherein $R_1$ is an H-atom, alkyl group having 1 to 4 carbon atoms, alkoxy group having 1 to 4 carbon atoms, alkoxycarbonyl group having 1 to 4 carbon atoms, formyl group and $NO_2$ group,

$R_2$ is an H-atom, N-atom, O-atom, alkyl group having 1 to 4 carbon atoms, alkoxy group having 1 to 4 carbon atoms, alkoxycarbonyl group having 1 to 4 carbon atoms, $R_3$ is an H-atom, N-atom, O-atom, alkyl group having 1 to 4 carbon atoms, alkoxy group having 1 to 4 carbon atoms, alkoxycarbonyl group having 1 to 4 carbon atoms; an organic solvent; and

at least one intensifier additive.

According to an embodiment of the present disclosure, the organic solvents are selected from one or more or combination of tetra hydro furan (THF), dimethyl formamide, dimethyl sulphoxide, diethyl ether, benzene, carbon tetrachloride, trichloro ethylene, ethers, esters, ketones, amines, tetrachloroethylene, toluene, methyl chloride, hexane, nitrated or chlorinated hydrocarbons, alcohols, acetonitrile, glycols, pyridine, and xylene, aqueous solution of an alcohol selected from the group comprising of diethylene glycol monobutyl ether, ethanol, butanol, propanol, butyl cellosolve, isopropanol, methanol, propylene glycol, 2-ethylhexanol, hexylene glycol, and glycolic acid, acetic acid, orthophosphoric acid, a fatty imidazoline and the like.

According to an embodiment of the present disclosure, the organic solvent is tetra hydro furan (THF).

According to an embodiment of the present disclosure, the organic solvent is ethyl alcohol.

According to an embodiment of the present disclosure, the composition comprises from about 0.001% v/v to 50% v/v organic solvent of the total volume of the composition, preferably, the composition comprises from about 0.1% v/v to 40% v/v organic solvent of the total volume of the composition.

According to a preferred embodiment of the present disclosure, the composition comprises from about 1% v/v to 30% v/v organic solvent of the total volume of the composition.

According to an embodiment of the present disclosure, the intensifier additive is selected from the group

comprising formic acid (FA), acetic acid, potassium iodide (KI), zinc nitrate (Zn(NO3)2 , aldehydes and salts, and/or derivatives of arsenic, mercury, iodine, copper, antimony, and bismuth and derivatives thereof.

According to an embodiment of the present disclosure, the intensifier additive is potassium iodide (KI).

According to an embodiment of the present disclosure, the intensifier additive is formic acid (FA).

According to an embodiment of the present disclosure, the composition comprises from about 0.05% w/v to 30% w/v intensifier of the total volume of the composition, preferably, from about 0.1% w/v to 20% w/v intensifier additive of the total volume of the composition.

According to a preferred embodiment of the present disclosure, the composition comprises from about 0.1% w/v to 10% w/v intensifier additive of the total volume of the composition.

According to an embodiment of the present disclosure, the corrosion inhibitor composition may further comprise of colorant, preservative, opulent, emulsifiers, surfactants, additives, fillers or extenders, co-solvent or coalescing agent and other suitable excipients.

According to an embodiment of the present disclosure, the corrosion inhibitor composition is formulated in the form a liquid formulations.

According to an embodiment of the present disclosure, the corrosion inhibitor composition is prepared by the process comprising steps:

(a) adding a thiophenecarboxaldehyde compound of a formula (I):

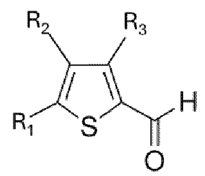

in an organic solvent and homogenizing them to obtain a premix;
(b) adding at least one intensifier additive to the premix; and
(c) homogenizing the premix of step (b) to obtain the corrosion inhibitor composition.

According to an embodiment of the present disclosure, an auxiliary agent and water is added to the premix and homogenized to obtain the corrosion inhibitor composition.

According to an embodiment of the present disclosure, the corrosion inhibitor composition is prepared by the process comprising steps:

(a) adding 5-methyl-2-thiophenecarboxaldehyde in ethyl alcohol and mix them to obtain a premix;
(b) adding potassium iodide to the premix and adding water to obtain a solution; and
(c) homogenizing the solution of step (b) to obtain the corrosion inhibitor composition.

According to an embodiment of the present disclosure, a method of inhibiting corrosion by applying to ferrous metals, the corrosion inhibitor composition comprising:

(a) at least one thiophenecarboxaldehyde compound of a formula:

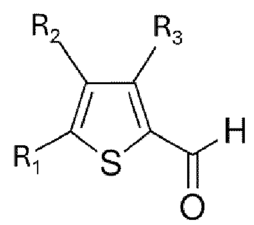

wherein $R_1$ is an H-atom, alkyl group having 1 to 4 carbon atoms, alkoxy group having 1 to 4 carbon atoms, alkoxycarbonyl group having 1 to 4 carbon atoms, formyl group and $NO_2$ group,
$R_2$ is an H-atom, N-atom, O-atom, alkyl group having 1 to 4 carbon atoms, alkoxy group having 1 to 4 carbon atoms, alkoxycarbonyl group having 1 to 4 carbon atoms,
$R_3$ is an H-atom, N-atom, O-atom, alkyl group having 1 to 4 carbon atoms, alkoxy group having 1 to 4 carbon atoms, alkoxycarbonyl group having 1 to 4 carbon atoms;

(b) an organic solvent; and
(c) at least one intensifier additive,
wherein the method involves contacting the corrosion inhibitor composition to the ferrous metals in a corrosion inducing environment, wherein the corrosion inducing environment is an aqueous acidic solution in the form of a) a water-containing hydrocarbon, b) a water-containing gas with acidic solution, c) a water containing gas without acidic solution, and d) a combination thereof.

According to an embodiment of the present invention, the method of inhibiting corrosion by applying the corrosion inhibitor to ferrous metals after diluting the corrosion inhibitor composition with water.
According to an embodiment of the present disclosure, a method of inhibiting corrosion by applying to ferrous metals, the corrosion inhibitor composition comprises (a) 5-methyl-2-thiophenecarboxaldehyde, (b) ethyl alcohol, and (c) potassium iodide.
According to an embodiment of the present disclosure, the method of inhibiting corrosion by applying the corrosion inhibitor composition to the ferrous metals wherein the ferrous metals are selected from carbon steel, stainless steel, alloy steel, steels, and cast irons.
According to an embodiment of the present disclosure, wherein the corrosion inhibitor composition is applied in an aqueous acidic environment.
According to an embodiment of the present disclosure, wherein the wherein the method involves contacting the corrosion inhibitor composition to the ferrous metals in a corrosion inducing environment, wherein the corrosion inducing environment is an aqueous acidic solution in the form of a) a water-containing hydrocarbon, b) a water-containing gas with acidic solution, c) a water containing gas without acidic solution, and d) a combination thereof.
According to an embodiment of the present disclosure, wherein the corrosion inhibitor composition is in the form of a kit comprises the corrosion inhibitor composition and an instruction manual instructing a user to dilute the corrosion inhibitor composition with water before application.
According to an embodiment of the present disclosure, the kit comprises the corrosion inhibitor composition comprising (a) 5-methyl-2-thiophenecarboxaldehyde, (b) ethyl alcohol, and (c) potassium iodide; and an instruction manual instructing a user to dilute the corrosion inhibitor composition with water before application.
The invention shall now be described with reference to the following specific examples. It should be noted that the examples appended below illustrate rather than limit the invention and that those skilled in the art will be able to design many alternative embodiments without departing from the scope of the present invention.
Example 1: A formulation of 5-methyl-2-thiophenecarboxaldehyde according to the present invention is prepared as follows:

| # | Ingredient(s) | Quantity |
|---|---|---|
| 1 | 5-methyl-2-thiophenecarboxaldehyde | 200 mg/L |
| 2 | Ethyl alcohol | 5 ml |
| 3 | Potassium iodide | 0.25% |
| 4 | Water | q.s. |
| | Total | 100 ml |

Process: 200 mg 5-methyl-2-thiophenecarboxaldehyde is mixed in 5ml ethyl alcohol and gently stirred to obtain a premix. To the premix, 0.25% potassium iodide is added followed by adding water to make 100ml solution of the corrosion inhibitor composition.
Example 2: A formulation of 5-methyl-2-thiophenecarboxaldehyde according to the present invention is prepared as follows:

| # | Ingredient(s) | Quantity |
|---|---|---|
| 1 | 5-methyl-2-thiophenecarboxaldehyde | 500 mg/L |
| 2 | Ethyl alcohol | 5 ml |
| 3 | Potassium iodide | 0.5% |
| 4 | Water | q.s. |
| | Total | 100 ml |

The ingredients are added in the above-mentioned quantity and processed according to the process described in example-1 to obtain the corrosion inhibitor composition.

Example 3: A formulation of 5-Nitrothiophene-2-carboxaldehyde according to the present invention is prepared as follows:

| # | Ingredient(s) | Quantity |
|---|---|---|
| 1 | 5-Nitrothiophene-2-carboxaldehyde | 200 mg/L |
| 2 | Ethyl alcohol | 5 ml |
| 3 | Potassium iodide | 0.5% |
| 4 | Water | q.s. |
| | Total | 100 ml |

The ingredients are added in the above-mentioned quantity and processed according to the process described in example-1 to obtain the corrosion inhibitor composition.

Example 4: A formulation of 5-Nitrothiophene-2-carboxaldehyde according to the present invention is prepared as follows:

| # | Ingredient(s) | Quantity |
|---|---|---|
| 1 | 5-Nitrothiophene-2-carboxaldehyde | 500 mg/L |
| 2 | 1-propanol | 5 ml |
| 3 | Potassium iodide | 0.5% |
| 4 | Water | q.s. |
| | Total | 100 ml |

The ingredients are added in the above-mentioned quantity and processed according to the process described in example-1 to obtain the corrosion inhibitor composition.

COMPUTER SIMULATION FOR SCREENING COMPOUNDS:

The $\Delta E_{gap}$ computation is performed for several compounds taken from a database of environmentally friendly compounds. The compounds are shortlisted based on lower $E_{gap}$. To calculate the $\Delta E_{gap}$, HOMO and LUMO are first calculated for the compounds using NWChem software and then $\Delta E_{gap}$ is computed. Subsequently, adsorption energy of the molecule on iron (Fe) surface is computed in order to understand the nature and strength of adsorption. As can be seen from FIG. 2, 5-methyl-2-thiophenecarboxaldehyde adsorbs very strongly with the underlying Fe-surface in a predominantly flat orientation and characterized by a plethora of C/O/S-Fe bonds. The computed DFT-D3 adsorption energy is around -78 kcal/mol which is significantly higher (in magnitude) to ~ -57 kcal/mol for propargyl alcohol, indicating a strong adsorption & inhibition effect by 5-methyl-2-thiophenecarboxaldehyde. The other chemical compounds having significantly lower gap shown below in Table-1 are chosen for adsorption energy calculation with the steel surface, a ferrous alloy. It is found that the thiophenecarboxaldehyde derivatives shows significantly lower gap and thus indicating high adsorption energy. Further, the below screened compounds are utilized in preparing the corrosion inhibitor compositions.

Table-1

| **Chemical compounds** | ($E_{HOMO}$) | ($E_{LUMO}$) | $\Delta E_{gap}$ |
|---|---|---|---|
| 5-Phenylthiophene-2-carbaldehyde | -7.04 | -2.24 | 4.80 |
| 5-Formyl-2-thiophenecarboxylic_acid | -7.63 | -3.06 | 4.57 |
| 5-Nitrothiophene-2-carboxaldehyde | -8.14 | -3.82 | 4.32 |
| 3-Ethyl-2-thiophenecarboxaldehyde | -7.04 | -2.10 | 4.94 |
| 5-Ethyl-2-thiophenecarboxaldehyde | -6.89 | -2.18 | 4.71 |
| 3-Methyl-2-thiophenecarboxaldehyde | -7.03 | -2.17 | 4.86 |

(continued)

| **Chemical compounds** | ($E_{HOMO}$) | ($E_{LUMO}$) | $\Delta E_{gap}$ |
|---|---|---|---|
| 5-Methyl-2-thiophenecarboxaldehyde | -6.90 | -2.19 | 4.71 |

TEST OF EFFICACY FOR THE CORROSION INHIBITOR COMPOSITIONS

The corrosion inhibitor composition of the example-1 is tested for its corrosion inhibition effect on steel at two temperatures. The steel being the ferrous alloy has the following composition:

| Ingredients | Quantity (%w/w) |
|---|---|
| Carbon (C) | 0.044 |
| Silicon (Si) | 0.04 |
| Manganese (Mn) | 1.15 |
| Phosphorus | 0.028 |
| Sulphur | 0.025 |
| Chromium | 0.051 |
| Molybdenum | 0.001 |
| Nickle | 0.001 |
| Copper | 0.052 |
| Vanadium | 0.011 |
| Iron | q.s. (100%) |

The steel coupons are initially abraded with various emery papers of decreasing coarseness i.e. 80, 150, 220, 400 grits to obtain a fine finish surface. The fine finished coupons are cleaned with acetone and then wrapped in paper to avoid any further oxidation and stored in a safe and dry place until further use. The 400 grit finished coupons are immersed in 100ml 1M HCl solution for 2hrs at room temperature and at 600C, to find out the corrosion rate. Similarly, the fine finished coupons are also immersed in 100ml 1M HCl along with the composition of the example-1 with an effective concentration of inhibitor 200, 500 and 1000 ppm for 2hrs at room temperatures. It is found that the composition of example-1 effectively controlled the corrosion with the corrosion inhibition efficiency to ~92%. As, it is also essential for the corrosion inhibitors to perform well in case of higher temperatures. Further, the composition of example-1 is tested at higher temperatures. The below Table-2 provides the information on test results. It is evident from the Table-2 that the inhibition efficiencies at 60°C is relatively higher than that of room temperature. The average corrosion rates (CR) at room temperature and 60 °C in 1M HCl without inhibitor for 2 hrs immersion are 1.1081 cm/y and 16.42325 cm/y respectively. The inhibition efficiency (IE) is calculated using the formula:

$$IE\ (\%) = \frac{(CR\ without\ inhibitor) - (CR\ with\ inhibitor)}{CR\ without\ inhibitor}\ x\ 100$$

Table-2

| # | Conc. (ppm) of 5-methyl-2-thiophenecarboxaldehyde | Intensifier (wt% KI) | T (°C) | IE (%) |
|---|---|---|---|---|
| **1** | 200 | - | 27 | 54.03 |
| **2** | 500 | - | 27 | 63.58 |
| **3** | 1000 | - | 27 | 72.65 |
| **4** | 1000 | 0.1 | 27 | 84.07 |
| **5** | 1000 | 0.25 | 27 | 90.43 |
| **6** | 1000 | 0.5 | 27 | 92.36 |

(continued)

| # | Conc. (ppm) of 5-methyl-2-thiophenecarboxaldehyde | Intensifier (wt% KI) | T (°C) | IE (%) |
|---|---|---|---|---|
| **8** | 1000 | 0.5 | 60 | 95.06 |

It is found that the corrosion inhibitor composition of the example-1 successfully inhibit the corrosion on steel surface in an acidic environment at various concentrations (200 ppm, 500 ppm and 1000 ppm) and at various temperatures ranging from 25°C to 60°C.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the corrosion related damage to the ferrous alloys. The corrosion inhibitor composition developed according to the present invention successfully inhibits the corrosion in ferrous alloys at various concentrations and at various temperature range. The computer simulation performed to screen the compounds having low ΔEgap rendered good inhibition efficiency. Compositions developed using the compounds having low Egap not only found to be effective in controlling the corrosion but also found to be safe to the environment. The invention as disclosed herein describes the corrosion inhibitor composition comprising an environmentally safer chemical. Therefore, the corrosion inhibitor composition is suggested as a green corrosion inhibitor composition and a better alternative compared to other corrosion inhibitor compositions available in the market.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs,

DVDs, flash drives, disks, and any other known physical storage media.

It is intended that the disclosure and examples be considered as exemplary only, with a true scope of disclosed embodiments being indicated by the following claims.

## Claims

1. A corrosion inhibitor composition comprising:

at least one thiophenecarboxaldehyde compound of a formula:

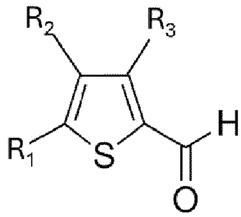

wherein $R_1$ is H-atom, alkyl group having 1 to 4 carbon atoms, alkoxy group having 1 to 4 carbon atoms, alkoxycarbonyl group having 1 to 4 carbon atoms, formyl group, and $NO_2$ group,
$R_2$ is H-atom, alkyl group having 1 to 4 carbon atoms, alkoxy group having 1 to 4 carbon atoms, alkoxycarbonyl group having 1 to 4 carbon atoms, and $R_3$ is H-atom, alkyl group having 1 to 4 carbon atoms, alkoxy group having 1 to 4 carbon atoms, alkoxycarbonyl group having 1 to 4 carbon atoms.

2. The composition as claimed in claim 1, wherein the thiophenecarboxaldehyde compound is selected from the group comprising of 3-methyl-2-thiophenecarboxaldehyde, 5-methyl-2-thiophenecarboxaldehyde, 3-ethyl-2-thiophenecarboxaldehyde and 5-ethyl-2-thiophenecarboxaldehyde, 5-phenylthiophene-2-carbaldehyde, 5-formyl-2-thiophenecarboxylic acid, and 5-nitrothiophene-2-carboxaldehyde.

3. The composition as claimed in claim 1, wherein the thiophenecarboxaldehyde compound is present in an amount from 0.01 to 10000 parts per million by volume.

4. The composition as claimed in claim 1, wherein the composition comprises(a) an organic solvent; and (b) at least one intensifier additive.

5. The composition as claimed in claim 4, wherein the organic solvent is selected from one or more or combination of tetra hydro furan (THF), dimethyl formamide, dimethyl sulphoxide, ethanol, propanol, diethyl ether, benzene, carbon tetrachloride, trichloro ethylene, ethers, esters, ketones, amines, tetrachloroethylene, toluene, methyl chloride, hexane, nitrated or chlorinated hydrocarbons, alcohols, acetonitrile, glycols, pyridine, and xylene.

6. The composition as claimed in claim 4, wherein the intensifier additive is selected from a group comprising of formic acid (FA), acetic acid, potassium iodide (KI), zinc nitrate ($Zn(NO_3)_2$, aldehydes and salts, and one or more derivatives of arsenic, mercury, iodine, copper, antimony, and bismuth.

7. The composition as claimed in claim 4, wherein the composition comprises:

0.01 to 10000 parts per million by volume 5-methyl-2-thiophenecarboxaldehyde;
0.001% v/v to 10% v/v ethyl alcohol; and
0.05% w/w to 10% w/w potassium iodide.

8. A method of preparing a corrosion inhibitor composition comprising steps:

(i) adding a thiophenecarboxaldehyde compound of a formula:

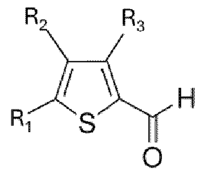

in an organic solvent and homogenizing them to obtain a premix;
(ii) adding at least one intensifier additive to the premix; and
(iii) homogenizing the premix of step (ii) to obtain the corrosion inhibitor composition, and wherein the corrosion inhibitor composition comprises:

(a) thiophenecarboxaldehyde compound of a formula:

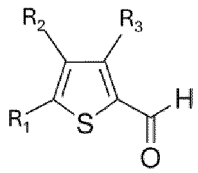

(b) an organic solvent; and (c) at least one intensifier additive.

**9.** A method of inhibiting corrosion by applying to ferrous metals, the corrosion inhibitor composition comprising:

(a) a thiophenecarboxaldehyde compound of a formula:

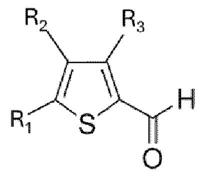

(b) organic solvent, and (c) an intensifier additive, wherein the corrosion inhibitor composition is contacted with the ferrous metals including one of carbon steel, stainless steel, alloy steel, steels, and cast irons in a corrosion inducing environment, and wherein the corrosion inducing environment is an aqueous acidic solution in the form of (i) a water-containing hydrocarbon, (ii) a water-containing gas with acidic solution, and (iii) a water containing gas without acidic solution, and d) a combination thereof.

**10.** The method of inhibiting corrosion as claimed in claim 9, wherein the corrosion inhibitor composition is applied to the ferrous metals after diluting the corrosion inhibitor composition with water.

System 100

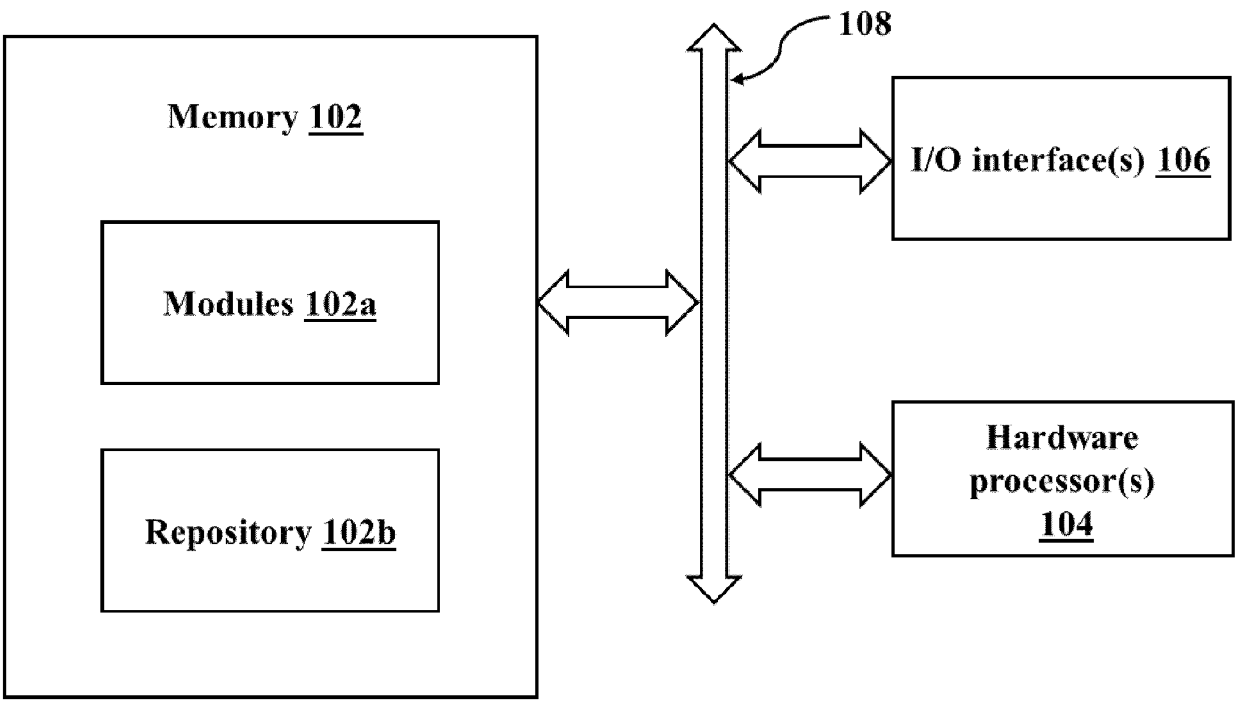


FIG. 1

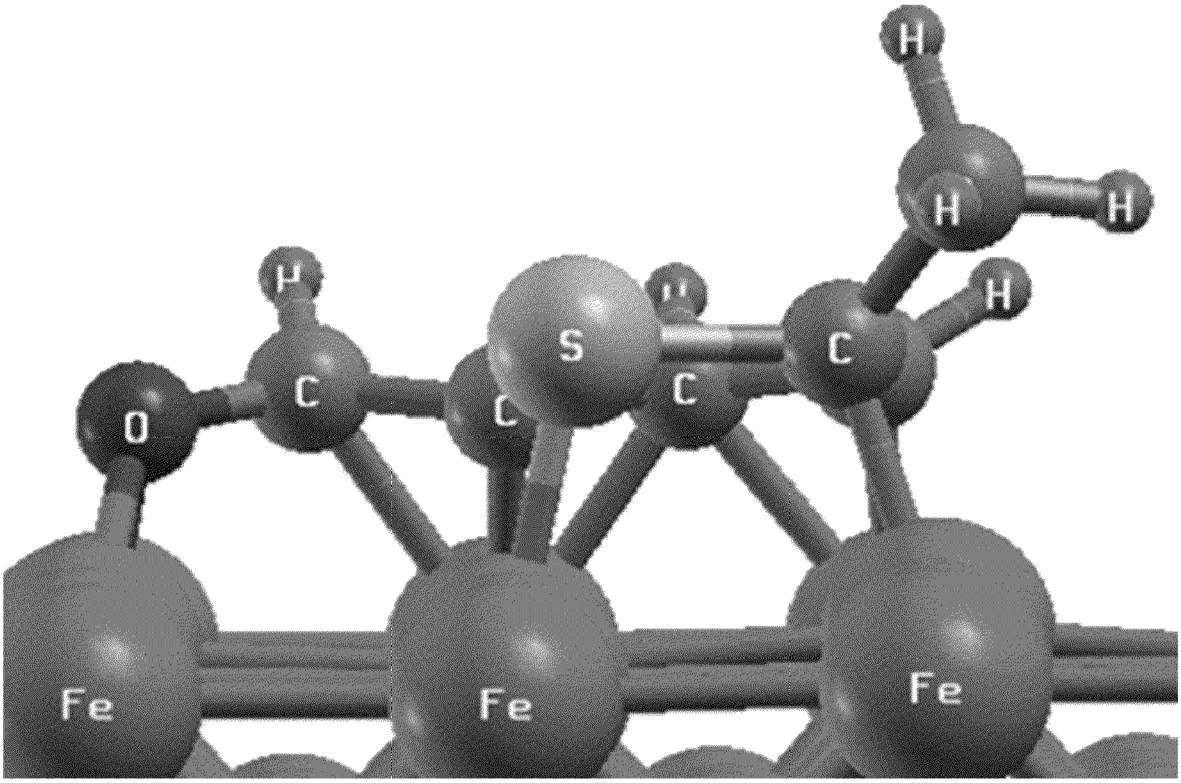

FIG. 2

Europäisches Patentamt
European Patent Office
Office européen des brevets

# EUROPEAN SEARCH REPORT

Application Number
EP 25 16 5869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHALED K.F. ET AL: "Predictive Model for Corrosion Inhibition of Mild Steel by Thiophene and Its Derivatives Using Artificial Neural Network", INTERNATIONAL JOURNAL OF ELECTROCHEMICAL SCIENCE, vol. 7, no. 2, 1 February 2012 (2012-02-01), pages 1045-1059, XP093304221, Serbia ISSN: 1452-3981, DOI: 10.1016/S1452-3981(23)13393-1 | 1-6 | INV. C23F11/08 C23F11/10 C23F11/16 |
| A | * Experimental details * * table 1 * | 7-10 | |
| | ----- | | |

| TECHNICAL FIELDS SEARCHED (IPC) |
|---|
| C23F |

The present search report has been drawn up for all claims

1

| Place of search | Date of completion of the search | Examiner |
|---|---|---|
| The Hague | 12 August 2025 | Poole, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202421031359